Europäisches Patentamt

European Patent Office

Office européen des brevets

(19)

(11) Veröffentlichungsnummer: **0 059 984**
**B1**

(12) **EUROPÄISCHE PATENTSCHRIFT**

(45) Veröffentlichungstag der Patentschrift:
19.06.85

(51) Int. Cl.⁴: **B 65 G 47/64,** B 65 G 47/46,
B 65 G 47/34, B 65 G 47/71

(21) Anmeldenummer: **82101919.7**

(22) Anmeldetag: **10.03.82**

(54) **Ausschleusvorrichtung für eine Förderbahn.**

(30) Priorität: 11.03.81 DE 3109174

(43) Veröffentlichungstag der Anmeldung:
15.09.82 Patentblatt 82/37

(45) Bekanntmachung des Hinweises auf die Patenterteilung:
19.06.85 Patentblatt 85/25

(84) Benannte Vertragsstaaten:
AT BE CH DE FR GB IT LI NL SE

(56) Entgegenhaltungen:
AT - B - 268 144
DE - U - 8 017 695
GB - A - 818 892
US - A - 1 809 456
US - A - 4 003 462
US - A - 4 011 935

(73) Patentinhaber: Gebhardt Fördertechnik GmbH,
Postfach 304, D-6920 Sinsheim (DE)

(72) Erfinder: Felder, Christian, Dipl.-Ing.,
Forsthausstrasse 12, D-6072 Dreieichenhain (DE)

(74) Vertreter: Neugebauer, Bernhard, Tölzer Strasse 7,
D-7100 Heilbronn (DE)

## Beschreibung

Die Erfindung betrifft eine Ausschleusvorrichtung für eine Förderbahn zum Transportieren von Stückgut mit einem das Stückgut tragenden, zwischen seitlichen Längsprofilen gelagerten Transportmittel mit mindestens einer in der Förderbahn um eine waagerechte Achse schwenkbaren und mit einem Transportmittel versehenen Ausschleusklappe, die aus einer Transportlage in der Ebene der Förderbahn in eine in Transportrichtung schräg aus der Förderbahn herausführende Ausschleuslage stellbar ist und einer Antriebsvorrichtung für die Transportmittel von Förderbahn und Ausschleusklappe.

Aus der US-PS 4 011 935 ist bereits eine Ausschleusvorrichtung der eingangs genannten Gattung bekannt. Die Antriebsmittel für die Transportmittel von Förderbahn und Ausschleusklappe sind hierbei seitlich außerhalb neben einem der die Förderbahn tragenden Längsprofile angeordnet. Damit ergibt sich eine zusätzliche Verbreiterung der Förderbahn. Ferner erfüllen die Längsprofile nur den einen Zweck, nämlich die Förderbahn zu tragen. Für eventuelle Führungsaufgaben für das zu transportierende Stückgut müssen somit noch eigene Mittel vorgesehen werden. Die bekannte Ausschleusvorrichtung einschließlich der Förderbahn erfordert daher unnötig hohen Platzbedarf und ist in ihrer Ausgestaltung aufwendig.

Aufgabe der Erfindung ist es daher, die Ausschleusvorrichtung der eingangs genannten Gattung so zu verbessern, daß bei hoher Förderleistung ein einfacher Aufbau mit geringem Platzbedarf gegeben ist.

Die mit der Erfindung erzielten Vorteile bestehen insbesondere darin, daß durch die Anordnung der Antriebsvorrichtung innerhalb eines Längsprofiles und zwischen diesem und dem Transportmittel die Antriebsvorrichtung ohne weiteren Platzbedarf in die Förderbahn integriert ist, wobei sie zusätzlich infolge der Ausbildung des Längsprofils geschützt untergebracht ist. Damit sind schädliche Einwirkungen auf die Antriebsvorrichtungen aus Umwelteinflüssen, wie Staub, Feuchtigkeit, herabfallende Gegenstände usw., ausgeschlossen. Ferner ist eine mögliche Unfallgefahr für hantierende Personen ausgeschlossen. Bei entsprechender Ausbildung und Lagerung von Längsprofil und Antriebsvorrichtung kann schließlich noch ein zusätzlicher Führungseffekt für das transportierte Stückgut erreicht werden. Das Stückgut kann somit auf der erfindungsgemäßen Ausschleusvorrichtung mit hoher Transportgeschwindigkeit und Stückdichte sicher transportiert und einzeln oder zu mehreren ausgeschleust werden, wobei durch den verringerten Platzbedarf eine erhöhte Anzahl von Förderbahnen nebeneinander angeordnet und durch die dichte Stückfolge eine hohe Anzahl von Stückgütern gefördert werden können.

Weitere Merkmale der Erfindung sind in den Unteransprüchen beschrieben.

Ausführungsbeispiele der Erfindung sind in der Zeichnung dargestellt und werden im folgenden näher beschrieben.

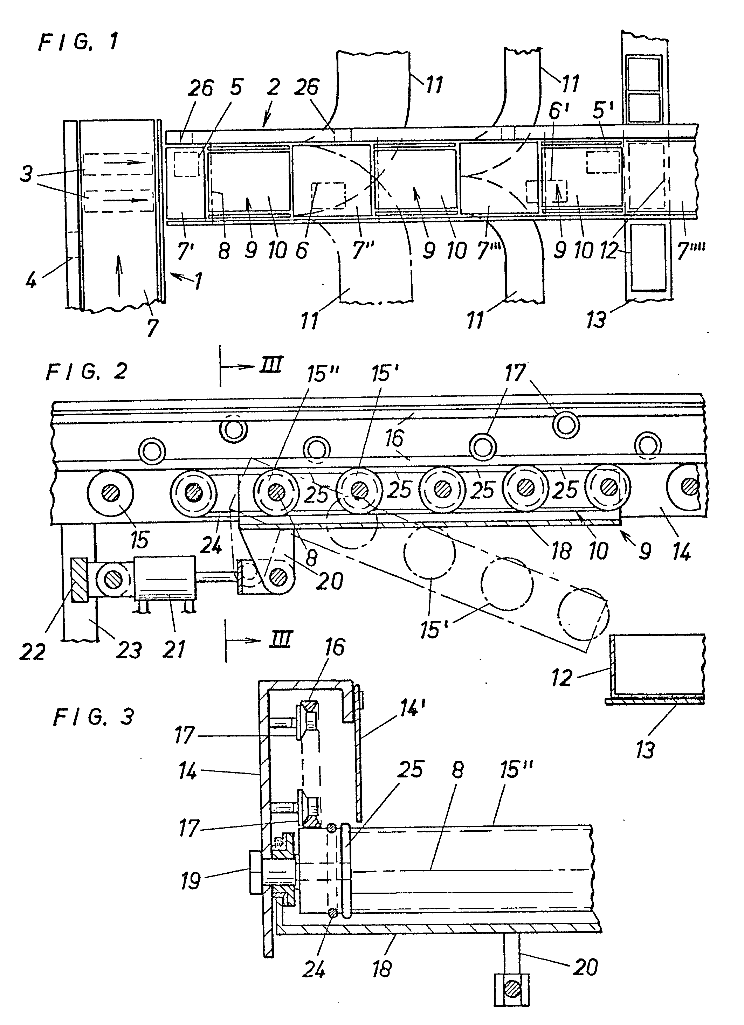

Es zeigen: Fig. 1 die Draufsicht auf eine Förderbahn mit Ausschleusvorrichtung;
Fig. 2 einen Teilschnitt von der Seite;
Fig. 3 die Schnittansicht gem. Linie III-III in Fig. 2;
Fig. 4 einen Teilschnitt von der Seite einer anderen Ausführungsform;
Fig. 5 die Teildraufsicht auf die Förderbahn gem. Fig. 4.

Die Förderanlage gem. Fig. 1 weist einen Zuförderer 1 auf, an den rechtwinklig eine weitere Förderbahn 2 angeschlossen ist. Zum Umsetzen von Stückgut auf die Förderbahn 2 dient ein Umsetzer 3, der durch ein Steuergerät gesteuert wird, um nicht nur bestimmte Stückgüter auf die Förderbahn 2 zu setzen, sondern auch diese in eine bestimmte Stelle in Querrichtung der Förderbahn 2 zu fördern, wie mit den Stückgütern 5 und 6 angedeutet ist. Der Zuförderer 1 und die Förderbahn 2 weisen zum Tragen und Transportieren ein beliebiges Fördermittel 7 auf, beispielsweise ein Band oder Tragrollen. Der Antrieb erfolgt in herkömmlicher Weise. Das Fördermittel 7 der Förderbahn 2 ist in mehrere Abschnitte 7', 7'', 7''', 7'''' usw. aufgeteilt, zwischen denen je eine um eine waagerechte Achse 8 schwenkbare Ausschleusklappe 9 vorgesehen ist. Diese ist gleichfalls mit einem Transportmittel 10 ausgestattet und kann aus ihrer Transportlage in der Ebene des Transportmittels 7 in eine abgewinkelte schräge Ausschleuslage geschwenkt werden, wie in Fig. 2 angedeutet ist. In der Ausschleuslage liegt das freie Ende der Ausschleusklappe 9 vor einer weiteren Transportbahn 11 oder einem zu füllenden Behälter 12, der seinerseits auf einer Förderbahn 13 steht und nach dem Füllen weitergerückt wird.

Nach den Fig. 2 und 3 besteht das Transportmittel 7 aus zwischen seitlichen Längsprofilen 14 drehbar gelagerten Tragrollen 15, die durch einen oben aufliegenden Keilriemen 16 angetrieben werden. Zum Führen und Andrücken des Keilriemens 16 dienen Röllchen 17, die am Längsprofil 14 gelagert sind. Der Keilriemen 16 wird durch einen nicht dargestellten Motor im Gegenuhrzeigersinn in Umlauf versetzt, so daß das Stückgut auf den im Uhrzeigersinn drehenden Tragrollen 15 von links nach rechts gefördert wird. Die Tragrollen 15' der Ausschleusklappe 9 entsprechen den Tragrollen 15 der Förderbahn 2 und sind an einem Rahmen 18 gelagert, der auf der als Achse 8 dienenden Steckachse 19 der in Transportrichtung ersten Tragrolle 15'' der Ausschleusklappe 9 schwenkbar angeordnet ist, so daß sie aus der Transportlage in der Ebene der Tragrollen 15 in die nach unten abgewinkelte Ausschleuslage geklappt werden kann, wie strichpunktiert angedeutet ist. Der Rahmen 18 besitzt unten einen nach unten ragenden Arm 20, an dem ein Stellmittel 21, z. B. die Kolbenstange eines Pneumatikzylinders, angelenkt ist. Das Stellmittel 21 ist an einer Querstrebe 22 zwischen das Längsprofil 14 tragenden Stützen 23 befestigt. Die Transport- und Ausschleuslage wird durch die beiden Endstellungen des Stellmittels 21 bestimmt.

Die Tragrollen 15' der Ausschleusklappe 9 werden in der Transportstellung durch den Keilriemen 16 angetrieben. Sie können freilaufend ausgebildet sein, so daß sie also in der Ausschleuslage infolge ihrer Massenträgheit und durch das nach unten sich bewegende Stückgut in Drehung gehalten werden. Zweckmäßigerweise sind die Tragrollen 15' jedoch ständig angetrieben. Zu diesem Zweck ist die letzte Tragrolle 15 vor der Ausschleusklappe 9 mit deren ersten Tragrolle 15'' durch einen Riemen 24 o. dgl. verbunden. Die Tragrolle 15'' und die übrigen Tragrollen 15'' der Ausschleusklappe 9 sind entsprechend paarweise durch Riemen 25 o. dgl. miteinander gekoppelt, so daß sie auch im abgesenkten Zustand weiterdrehen.

Es ist ersichtlich, daß ein auf die Förderbahn 2 gesetztes Stückgut auf dessen Transportmittel 7 befördert wird, wobei es durch die Augen von an der Seite angebrachten Steuergeräten 26 abgetastet wird. Bei zutreffender Kennung wird die zugeordnete Ausschleusklappe 9 abgesenkt, so daß das Stückgut nach unten auf eine der angeschlossenen Förderbahnen 11 oder in den Behälter 12, wie auch in Fig. 2 angedeutet ist, gefördert wird. Die Schwenkbewegung, also das Absenken, das Verharren bis das Stückgut die Ausschleusklappe 9 verlassen hat und das Rückstellen kann durch ein Zeitrelais gesteuert werden, es kann aber auch eine Lichtschranke angeordnet sein, die nach Freigabe der Ausschleusklappe 9 das Signal zum Rückstellen gibt.

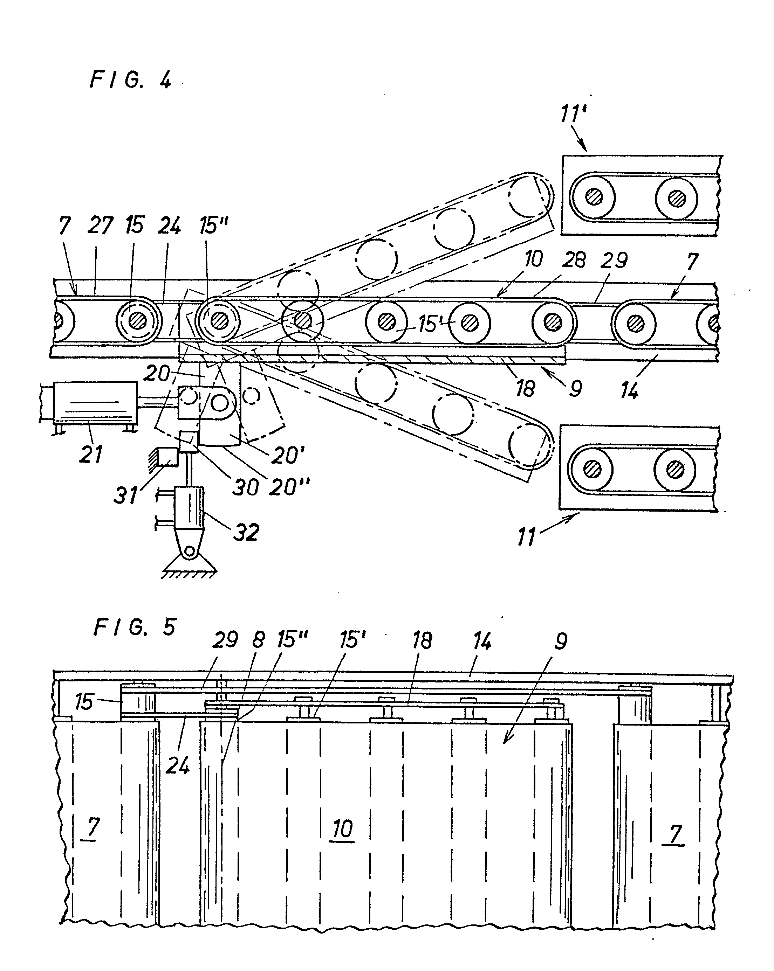

Das Transportmittel 7 kann auch als Bandförderer ausgebildet sein, wie in den Fig. 4 und 5 gezeigt ist. Die Tragrollen 15 sind dann von einem Band 27 umspannt. Entsprechend können auch die Tragrollen 15' und 15'' der Ausschleusklappe 9 von einem Band 28 umhüllt sein. Die Antriebsübertragung erfolgt wieder durch einen Riemen 24 zwischen den Tragrollen 15 und 15''. Zusätzlich sind noch die Tragrollen 15 am Ende und Anfang der Fördermittel 7 beiderseits der Auschleusklappe 9 durch einen weiteren Riemen 29 oder dgl. antriebsmäßig miteinander verbunden. Zum Absenken und Anheben der Ausschleusklappe 9 ist ebenfalls ein Stellmittel 21 vorgesehen. Die Funktion dieser Ausschleusvorrichtung entspricht der oben beschriebenen.

Selbstverständlich kann das Ausschleusen auch nach oben erfolgen, wie in Fig. 4 angedeutet ist. Oberhalb der Förderbahn 2 ist dann eine Anschlußbahn 11' vorgesehen. Das Ausschleusen kann nur nach oben bzw. unten erfolgen oder, wie gezeigt, wahlweise nach oben oder unten. Dann ist der Hub des Stellmittels 21 so ausgelegt, daß die obere und die untere Ausschleuslage das jeweilige Hubende darstellt. Zum Festlegen der mittleren Transportlage in der Ebene der Förderbahn 2 ist ein Anschlag 30 vorgesehen, an dem in der Transportlage der verlängerte Arm 20' des Rahmens 18 anliegt und der sich mit seiner anderen Seite an einem stationären Gleitstück 31 abstützt. Zum Verstellen des Anschlages 30 nach unten dient ein Stellzylinder 32, der am Rahmen der Förderbahn 2 gelagert ist. Soll die Ausschleusklappe 9 nach unten ausschwenken, dann wird der Anschlag 30 nach unten verstellt, so daß der Arm 20' im Uhrzeigersinn schwenken kann. Der Anschlag 30 kann sich dann unverzüglich an die gerundete Unterseite 20'' des Armes 20' anlegen, so daß er sofort bei Einnahme der Transportlage wieder in die Sperrstellung gelangt, wonach des Stellmittel 21 drucklos geschaltet wird.

Denkbar ist es natürlich auch, die Förderbahn als Schwerkraftbahn bzw. Staurollenbahn auszubilden. Die Funktion der Ausschleusvorrichtung ist dann die gleiche. Natürlich können auch verschiedene Transportmittel in der Förderbahn 2 und der Ausschleusklappe 9 vorgesehen sein. Schließlich kann es zweckmäßig sein, daß die Antriebsvorrichtung 16, 17 für das Transportmittel 7 ober- oder unterhalb des Transportmittels 7 angeordnet ist. Zur Unterbringung dieser Antriebsvorrichtung 16, 17 dient vorzugsweise das eine Längsprofil 14, das mit seiner offenen Seite gegen das Transportmittel 7 zeigt und dort eine durchgehend geschlossene Abdeckung 14' aufweist. Letztere dient sowohl zum Schutz der Antriebsvorrichtung 16, 17 als auch zur seitlichen Führung des Stückgutes auf dem Transportmittel 7.

Es ist ersichtlich, daß unabhängig von der Ausbildug des Transportmittels 7 das Stückgut ohne seitliche Richtungsänderung, also in Transportrichtung aus der Förderbahn 2 ausgeschleust wird, wobei das Stückgut nicht relativ zum Transportmittel 7 bewegt wird. Der hohe stationäre Reibungsschluß bleibt so unverändert erhalten, so daß das Stückgut seinen Standort in Querrichtung auf dem Transportmittel 7 sicher beibehält. Es kann somit bereits bei der Aufgabe des Stückgutes auf das Transportmittel 7 eine quergefächerte Sortierung für die erforderliche Auftragszusammenstellung vorgenommen werden. Die Stückgutfolge kann ferner so dicht abgestimmt sein, daß während des Ausschleusens eines Stückgutes 5', also bei schräg gestellter Ausschleusklappe 9 das folgende Stückgut 6' bereits auf die Ausschleusklappe 9 aufläuft. Bevor dieses Stückgut 6' jedoch das Ende der Ausschleusklappe 9 erreicht hat, ist dieser wieder in ihrer Transportstellung, und das Stückgut 6' wird in Transportrichtung auf der Förderbahn 2 weiterbefördert (Fig. 1).

**Patentansprüche**

1. Ausschleusvorrichtung für eine Förderbahn zum Transportieren von Stückgut mit einem das Stückgut tragenden, zwischen seitlichen Längsprofilen gelagerten Transportmittel (7) mit mindestens einer in der Förderbahn (2) um eine waagerechte Achse (8) schwenkbaren und mit einem Transportmittel (10) versehenen Ausschleusklappe (9), die aus einer Transportlage in der Ebene der Förderbahn (2) in eine in Transportrichtung schräg aus der Förderbahn (2) herausführende Ausschleuslage stellbar ist und einer Antriebsvorrichtung (16, 17) für die Transportmittel von Förderbahn und Ausschleusklappe, dadurch gekennzeichnet, daß die Antriebsvorrichtung (16, 17) in einem der Längsprofile (14) gelagert ist, das gegen das Transportmittel (7, 10) offen ausgebildet ist.

2. Ausschleusvorrichtung nach Anspruch 1, dadurch gekennzeichnet, daß die Antriebsvorrichtung (16, 17) ober- oder unterhalb der Transportmittel (7, 10) angeordnet ist.

3. Ausschleusvorrichtung nach Anspruch 1 oder 2, dadurch gekennzeichnet, daß die Öffnung des Längsprofils (14) gegen die Transportmittel (7, 10) durch eine durchlaufende Abdeckung (14') geschlossen ist.


## Claims

1. Delivery device to a conveyer track for the transportation of piece goods consisting of a carrying means of transportation (7) support between lateral longitudinal profiles and having at least one discharging trap (9) provided with a means of conveyance (10) installed inside the conveyer track (2) and swivelling around an horizontal axle (8) that can be positioned from a plain level of the conveyer track (2) into an inclined discharging position in the conveying direction.

The special feature is that it moreover comprises a driving equipment (16, 17) for both the means of transportation and the discharging trap being supported by one of the longitudinal profiles (14) and of open design on the side of the means of transportation (7, 10).

2. Pursuant to Claim 1 the special feature of the delivery device is that the driving equipment (16, 17) is fitted above and below the means of transportation (7, 10).

3. Pursuant to Claim 1 or 2 the special feature of the delivery device is that the opening of the longitudinal profile (14) on the side of the means of transportation (7, 10) is closed by a continuous cover (14').


## Revendications

1. L'appareil d'éclusage pour un chemin de transport destiné au transport de charges isolées par un moyen de transport (7) portant la charge isolée disposé entre des profilés longitudinaux latéraux et pourvu au minimum d'un clapet d'éclusage (9) installé sur le chemin de transport (2) et pivotant autour d'un arbre horizontal (8). Il est équipé d'un moyen de transport (10) qui est inclinable du chemin de transport horizontal en position inclinée.

Il est caractérisé par le fait qu'il possède un mécanisme de commande (16, 17) pour les moyens de transport à la fois du chemin de transport et du clapet d'éclusage qui est logé à l'intérieur d'un des profilés longitudinaux (14) de construction ouverte du côté du moyen de transport (7, 10).

2. La spécification (revendication) 1 relative à l'appareil d'éclusage est marquée par le fait que le mécanisme de commande (16, 17) est disposé au-dessous et au-dessus des moyens de transport.

3. La spécification (revendication) 1 ou 2 relative à l'appareil d'éclusage est marquée par le fait que l'ouverture du profilé longitudinal (14) du côté des moyens de transport (7, 10) est fermée par une couverture continue (14').

0 059 984

FIG. 1

FIG. 2

FIG. 3

FIG. 4

FIG. 5